# EUROPEAN PATENT SPECIFICATION

(11) **EP 0 557 648 B1**
(45) Date of publication and mention of the grant of the patent: **15.01.1997**
(21) Application number: 92309890.9
(22) Date of filing: 28.10.1992
(51) Int. Cl.: G02B 21/00, G02B 21/06, G01B 9/04, G01B 21/36

(54) **Metallographic microscope for the characterization of conductors drawing dies**
Metallographisches Mikroskop zur Untersuchung von Zugdüsen für Leiter
Microscope métallographique pour caractérisé une filière d'étirage

(30) Priority: 21.02.1992 MX 9200720
(43) Date of publication of application: 01.09.1993
(73) Proprietor: CENTRO DE INVESTIGACION Y DESARROLLO CONDUMEX, S.A. DE C.V., C.P. 76120 Queretaro (MX)
(72) Inventor: Longoria, Daniel Aguilera, C.P. 76120 Queretaro (MX); Garcia, Daniel Cardenas, C.P. 76120 Queretaro (MX); Ruiz, Fernando Luengas, C.P. 76120 Queretaro (MX)
(74) Representative: Swindell & Pearson

(56) References cited:
- EP-A- 0 297 254
- EP-A- 0 353 504
- GB-A- 2 138 240
- US-A- 4 027 942
- US-A- 5 112 129

## Description

### BACKGROUND OF THE INVENTION

Prior art for characterizing conductor drawing dies has several forms of application.

There are three known techniques according to the following:
The first one is to introduce, by hand, a piece of conductor to be drawn, through the die after that it is pulled either manually or mechanically from the other side and then the diameter of the wire is measured through calibrating tools thus determining the diameter of the die bearing, by repeating the measurements in different points of the wire, the oval shape of the wire and thus the oval shape of the die hearing may be determined.

Another known technique refers to the use of molding pastes useful only when one tries to determine the length of the bearing and the working angle of the die, if the diameter of the bearing is above 300 microns, which means that it cannot be applied to smaller diameters and having also the drawback that the measuring is made by means of a comparative reading in which the operators criteria has an influence.

Another conventional technique involves the use of a mechanical measuring device that determines the internal profile of the die by means of the introduction of a needle which tracks the shape of the internal profile which is then shown in a display. However this is only useful when applied to diameters of more than 700 microns and has the drawback that the results are interpreted by the operator.

The applicant has designed a computerized system for measuring diameter, oval shape, length and conical shape of the bearing, angle and out of center of the working cone of a conductor drawing die, through the improvements made to a metallographic microscope coupled to a computer and to an image digitazing system which allows to overcome the disadvantages of the traditional methods and to obtain better results related to the accuracy of measures taken in a shorter time and spanning on a larger number of measurements.

Another object of the invention is to apply this measuring system to measurements in the metalwork automotive industry or scientific equipment.

The present invention is defined in claim 1.

According to the present invention there is provided metallographic microscope apparatus for use with a video camera for the characterisation of conductor drawing dies, the apparatus comprising a body, a platen, means on the body for measuring displacement of the platen with respect to each of a pair of mutually perpendicular axes, means for locating a die in a predetermined position on the platen within the visual field of the camera, a lens system having objective lenses and eyepiece lenses, and an illumination system comprising episcopic and diascopic illumination subsystems, and having a light source being of suitable power and voltage to give a suitable duration, characterised in that the apparatus comprises a collimating system to provide a continuous, flat wave front, a power supply for the camera within the body, the power supply being controlled by a starting switch which also controls the microscope, internal feed lines for the camera and for supplying synchrony and video output signals, and a closed loop control circuit for the electronic control, monitoring, selection and adjustment of the light intensity, which circuit stabilises the power output of the diascopic illumination subsystem.

Preferably the collimating system comprises a diffuser to furnish a uniform illumination front, a shaft to make the illumination front flat, a shaft guide for locating and retaining the shaft in a required position and a spring which normally holds an upper portion of the shaft in contact with a lower portion of the platen of the microscope. There may be provided connectors attached to the body of the microscope of the supply of the synchrony and video output signals.

### BRIEF DESCRIPTION OF THE DRAWINGS

Fig. 1. - Is a side view of the modified metallographic microscope.

Fig. 2. - Corresponds to a longitudinal cross section of the light collimating system.

Fig. 3. - Is an isometric view of the platen and linear scales.

Fig. 4. - Is a block diagram of the closed loop control system.

Fig. 5. - Is a diagram of the discrete light intensity selector.

### DETAILED DESCRIPTION OF THE INVENTION

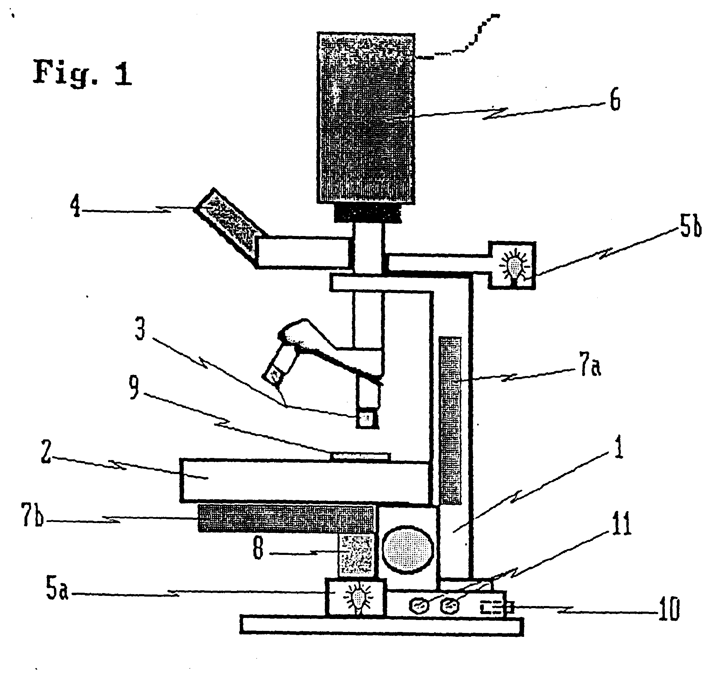

The present invention relates to improvements to a metallographic microscope useful for the characterization of conductor drawing dies, following is a description of the invention according to the drawings in figures 1 to 5.

The modified microscope has the following conventional parts:
body, platen, objective lenses, eye lenses, diascopic lighting subsystem, and episcopic lighting subsystem.

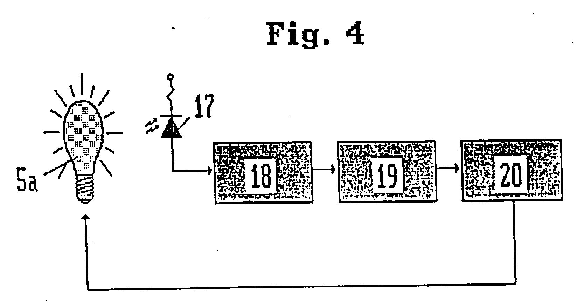

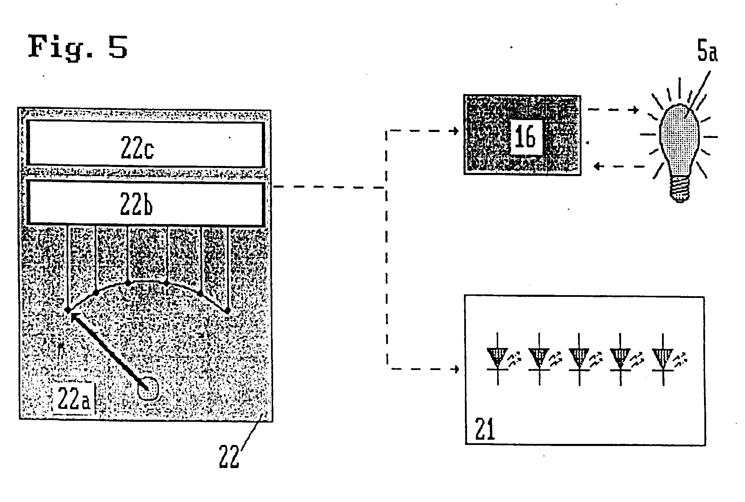

The invention is characterized by having the following changes:
Incorporation of an electronic circuit for the control, monitoring, selection and adjustment of the intensity of light. The control of the intensity of light has a closed loop circuit 16 in figure 4 which stabilizes the power output of the diascopic fighting subsystem 5a in figures 1 and 4. Figure 4 is a diagram of the closed loop control system 16. This system has an optic sensor 17 which receives the optical signal from the diascopic illumination subsystem 5a of figure 1 and 4, the amplifying stage 18 receives the electric signal from sensor 17 and amplifies it, a modulator 19 reacts to the variations of the signal and modulates the power stage 20 so that it increases or diminishes the feedings for the diascopic illumination subsystem 5a. Monitoring is accomplished by means of light emitting diodes 21, figure 5, which are turned on individually, one for each selected optical power level. The selection of the different levels of light is done through rotary switches 22a figure 5, with a fixed number of discrete steps. Figure 5 is a diagram of the discrete intensity selector 22 this selector governs the diascopic illumination subsystem 5a and consists of rotary switches 22a, the electronic system 22b and the light intensity adjusters 22c. The visual indicators of the light intensity 21 allow the system operator to know the light intensity that has been selected. The closed loop control system 16, figure 4 and 5, maintains the light intensity of the diascopic illumination subsystem in such a way that it does not change due to changes in voltage or aging of the diascopic lighting subsystem 5a. The light intensity adjusters 10, figure 1, that correspond to each position of the selector 11 are located in the back part of the body (1) figure 1 of the microscope.

Changes to the light sources power and voltage, with longer duration and made for hard work to be used both in the diascopic illumination subsystem 5a of figure 1 and in the episcopic illumination subsystem 5b of figure 1.

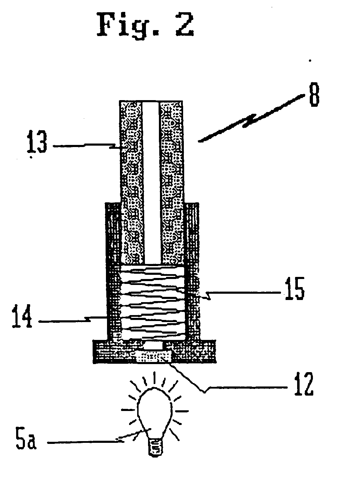

Incorporation of a collimating system 8, figures 1 and 2 which delivers a continuous and flat waveform. Figure 2 defines the parts that form the collimating system. The system has a difusor 12 which delivers an uniform light front, a shaft 13 which makes the light front flat, a shaft guide 14 in which the shaft is placed in order to keep it in the desired position and a spring 15 which allows the upper parts of the shaft to abut the lower part of the platen 2 figure 1 of the microscope.

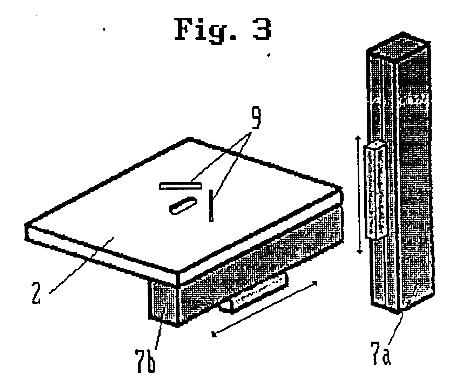

Two linear scales were integrated, 7a and 7b figure 3 to the body 1 figure 1. One of them, 7a figure 3 is used to measure the displacement of the platen 2 figura 1 and 3 in the vertical axis and the other 7 b figure 3 in the horizontal axis.

To the platen 2 figures 1 and 3, a positioning device 9, figures 1 and 3, is integrated in order to make placement easier, within the visual field of the camera 6 fig 1 of the die to be measured. Incorporation of a light source, 24 volts, AC, 60 hertz for the video camera 6 within the body 1 of the microscope and controlled through the same switch.

Cabling in the inside of the body 1 for feeding the camera 6 and supplying a synchrony and video output signal. The last two are accessible through connectors located in the back part of the body 1 of the microscope.

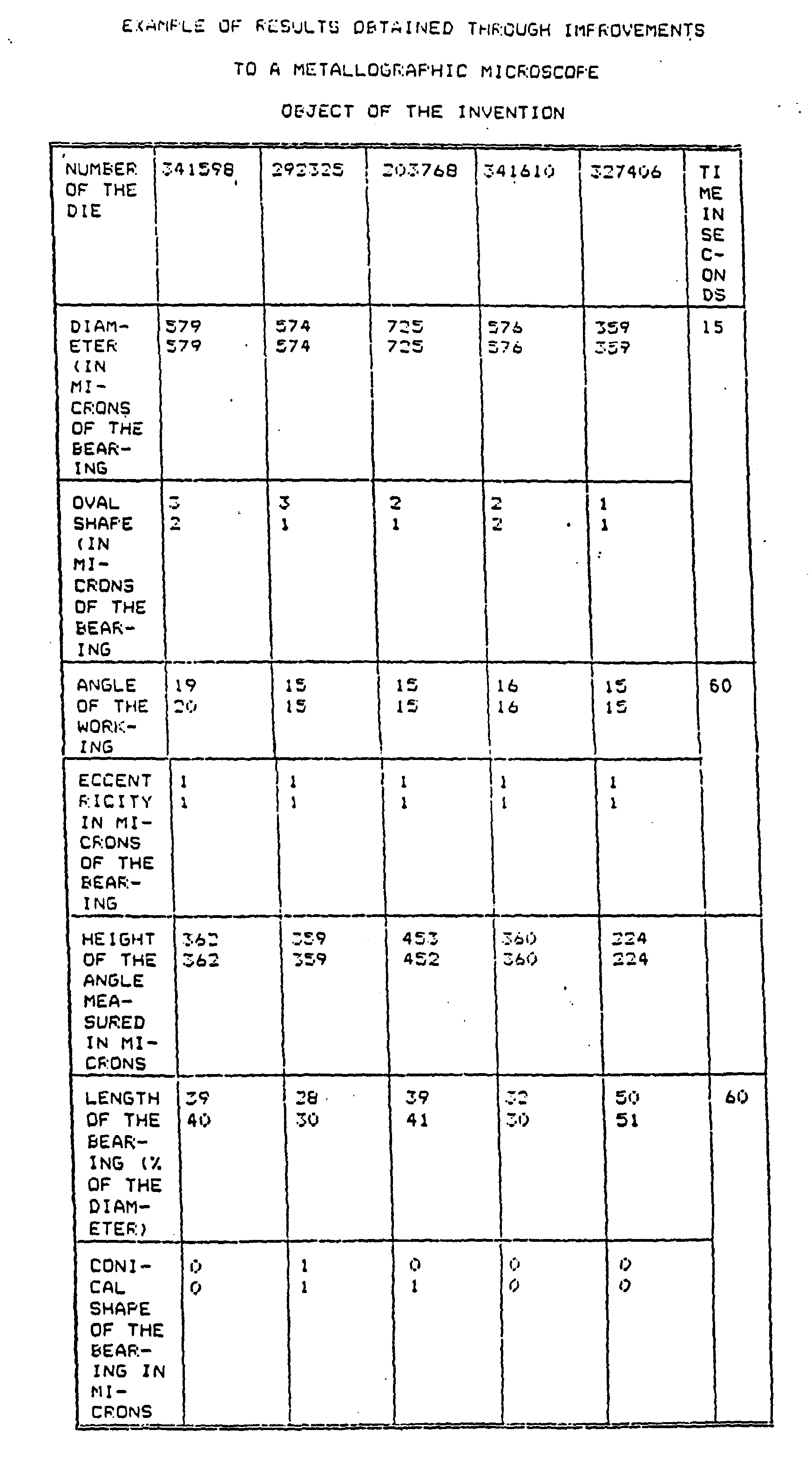

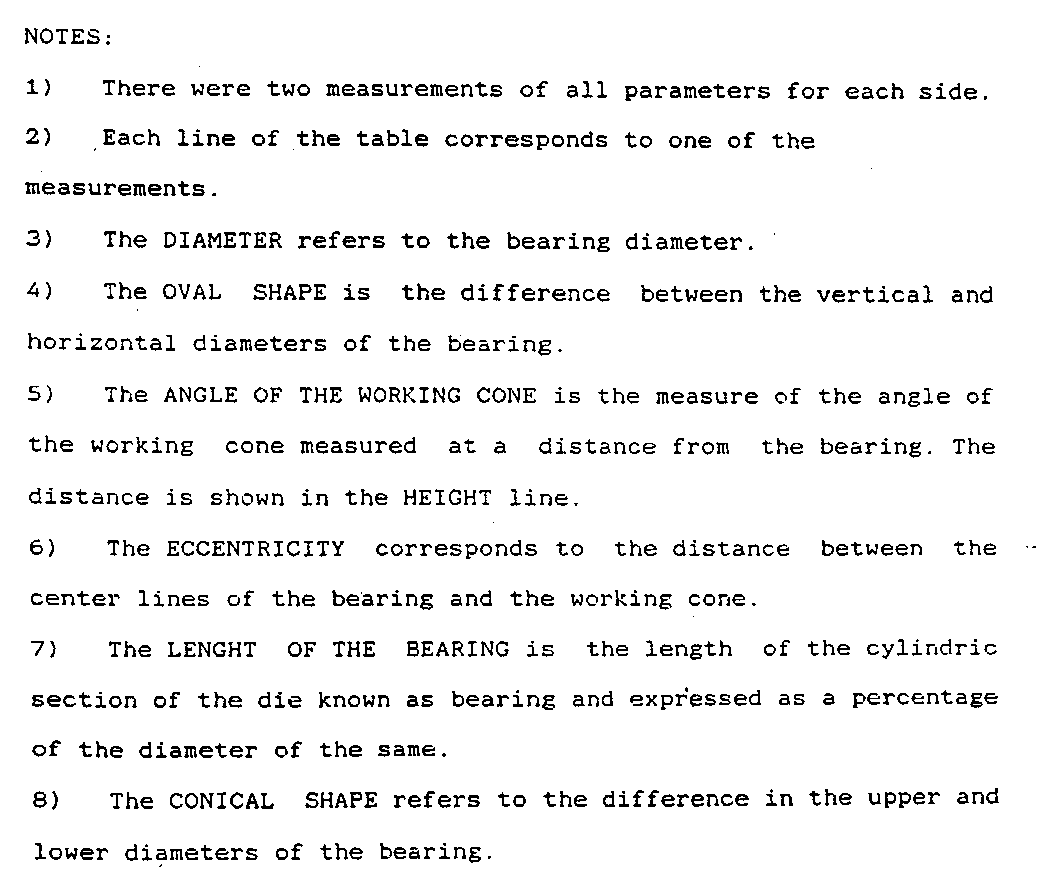

From the results shown in the above table, it can be seen that the measuring times are lower compared to the traditional methods. One can observe also that the number of functions are limited with regards to the span of different type of measurements with the traditional methods and the techniques of the present invention make measurements faster and measurements that cannot be obtained through the common methods are made.

## Claims

1. Metallographic microscope apparatus for use with a video camera (6) for the characterisation of conductor drawing dies, the apparatus comprising a body (1), a platen (2), means (7a,7b) on the body (1) for measuring displacement of the platen (2) with respect to each of a pair of mutually perpendicular axes, means (9) for locating a die in a predetermined position on the platen (2) within the visual field of the camera (6), a lens system having objective lenses (3) and eyepiece lenses (4), and an illumination system comprising episcopic and diascopic illumination subsystems (5b,5a), and having a light source being of suitable power and voltage to give a suitable duration, characterised in that the apparatus comprises a collimating system (8) to provide a continuous, flat wave front, a power supply for the camera (6) within the body (1), the power supply being controlled by a starting switch which also controls the microscope, internal feed lines for the camera and for supplying synchrony and video output signals, and a closed loop control circuit (16) for the electronic control, monitoring, selection and adjustment of the light intensity, which circuit stabilises the power output of the diascopic illumination subsystem (5a).

2. Metallographic microscope apparatus according to Claim 1, wherein the collimating system (8) comprises a diffuser (12) to furnish a uniform illumination front, a shaft (13) to make the illumination front flat, a shaft guide (14) for locating and retaining the shaft in a required position and a spring (15) which normally holds an upper portion of the shaft in contact with a lower portion of the platen (2) of the microscope.

3. Metallographic microscope apparatus according to any of the preceding Claims wherein there are provided connectors attached to the body (1) of the microscope of the supply of the synchrony and video output signals.

## Patentansprüche

1. Metallographische Mikroskopvorrichtung zur Verwendung mit einer Videokamera (6) für die Untersuchung von Zugdüsen für Leiter, mit einem Körper (1), einer Platte (2), Mitteln (7a, 7b) an dem Körper (1) zum Messen einer Verlagerung der Platte (2) bezüglich jeder Achse eines Paares von gegenseitig senkrechten Achsen, Mitteln (9) zum Lokalisieren einer Düse in einer vorbestimmten Position auf der Platte (2) innerhalb des Sichtfeldes der Kamera (6), einem Objektivlinsen (3) und Okularlinsen (4) enthaltenden Linsensystem und einem Beleuchtungssystem, das Episkop- und Diaskop-Beleuchtungsuntersysteme (5b, 5a) enthält und eine Lichtquelle mit passender Leistung und Spannung besitzt, um eine geeignete Zeitdauer zu erhalten, dadurch gekennzeichnet, daß die Vorrichtung ein Kollimationssystem (8) zum Erhalt einer kontinuierlichen, flachen Wellenfront, eine Energieversorgung für die Kamera (6) innerhalb des Körpers (1), wobei die Energieversorgung durch einen außerdem das Mikroskop steuernden Startschalter gesteuert wird, innere Versorgungsleitungen für die Kamera und für die Zufuhr von Synchronisations- und Videoausgangssignalen sowie einen geschlossenen Regelkreis (16) für die elektronische Steuerung, Überwachung, Auswahl und Einstellung der Lichtintensität enthält, wobei der Regelkreis die Leistungsabgabe des Diaskop-Beleuchtungsuntersystems (5a) stabilisiert.

2. Metallographische Mikroskopvorrichtung nach Anspruch 1, bei der das Kollimationssystem (8) einen Diffusor (12) zum Erhalt einer gleichmäßigen Beleuchtungsfront, einen Schaft (13) zum Flachmachen der Beleuchtungsfront, eine Schaftführung (14) zum Lokalisieren und Halten des Schachtes in einer erforderlichen Position und eine Feder (15) enthält, die normalerweise eine obere Partie des Schaftes in Kontakt mit einer unteren Partie der Platte (2) des Mikroskops hält.

3. Metallographische Mikroskopvorrichtung nach einem der vorstehenden Ansprüche, bei der am Körper (1) des Mikroskops befestigte Verbindungseinrichtungen für die Zufuhr der Synchronisation- und Videoausgangssignale vorgesehen sind.

## Revendications

1. Appareil constituant un microscope métallographique destiné à être utilisé avec une caméra vidéo (6) pour caractériser une filière d'étirage, l'appareil comprenant un corps (1), une platine (2), des moyens (7a, 7b) présents sur le corps (1) pour mesurer le déplacement de la platine (2) par rapport, respectivement, à deux axes perpendiculaires l'un à l'autre, des moyens (9) permettant de placer une filière dans une position prédéterminée sur la platine (9) à l'intérieur du champ visuel de la caméra (6), un système de lentilles possédant des lentilles formant objectifs (3) et des lentilles formant oculaires (3), et un système d'éclairage comprenant des sous-systèmes d'éclairage (5b, 5a) épiscopiques et diascopiques et possédant une source de lumière d'une puissance et d'une tension adaptées pour permettre une durée adaptée, caractérisé en ce que l'appareil comprend un système de collimation (8) pour fournir un front continu à ondes plates, une alimentation en énergie pour la caméra (6) située à l'intérieur du corps (1), l'alimentation en énergie étant commandée par un interrupteur de démarrage qui commande également le microscope, des lignes d'alimentation internes pour la caméra et pour la production de signaux de sortie vidéo et de synchronisme, et un circuit de commande (16) en boucle fermée pour la commande électronique, la surveillance, la sélection et le réglage de l'intensité de la lumière, circuit qui stabilise la sortie de puissance du sous-système d'éclairage diascopique (5a).

2. Appareil constituant un microscope métallographique selon la revendication 1, dans lequel le système de collimation (8) comprend un diffuseur (12) afin de produire un front d'éclairage uniforme, une tige (13) permettant de rendre le front d'éclairage plat, un système de guidage de tige (14) permettant de placer et de maintenir la tige dans une position requise et un ressort (15) qui maintient normalement une partie supérieure de la tige en contact avec une partie inférieure de la platine (2) du microscope.

3. Appareil constituant un microscope métallographique selon l'une quelconque des revendications précédentes, dans lequel sont prévus des connecteurs fixés au corps (1) du microscope pour la production des signaux de sortie vidéo et de synchronisme.
